# EUROPÄISCHE PATENTSCHRIFT

(11) **EP 3 484 753 B1**
(45) Veröffentlichungstag und Bekanntmachung des Hinweises auf die Patenterteilung: **19.05.2021**
(21) Anmeldenummer: 17746467.4
(22) Anmeldetag: 31.07.2017
(51) Int. Cl.: B60R 25/24

(54) **VERFAHREN ZUM AUSLÖSEN EINER FUNKTION EINES KRAFTFAHRZEUGS**
METHOD FOR RELEASING A FUNCTION OF A MOTOR VEHICLE
PROCÉDÉ POUR DÉCLENCHER UNE FONCTION D'UN VÉHICULE À MOTEUR

(30) Priorität: 19.09.2016 DE 102016117637
(43) Veröffentlichungstag der Anmeldung: 22.05.2019
(73) Patentinhaber: Huf Hülsbeck & Fürst GmbH & Co. KG, 42551 Velbert (DE)
(72) Erfinder: OBERBECKMANN, Kai Magnus, 42105 Wuppertal (DE)
(74) Vertreter: Zenz Patentanwälte Partnerschaft mbB
(86) Internationale Anmeldenummer: PCT/EP2017/069281
(87) Internationale Veröffentlichungsnummer: WO 2018/050345

(56) Entgegenhaltungen:
- EP-A2- 0 980 800
- EP-B1- 1 284 894
- DE-A1- 10 106 736
- DE-A1-102005 058 041
- DE-A1-102006 008 140
- DE-A1-102014 102 328

## Beschreibung

Die Erfindung betrifft ein Verfahren zum Auslösen einer Funktion eines Kraftfahrzeugs mittels eines passiven Zugangssystems.

Im Kraftfahrzeugwesen ist das Auslösen von Funktionen mittels passiver Zugangssysteme Stand der Technik. Mittels passiven Zugangssystemen kann ein Bediener eine Funktion auslösen, ohne dass eine aktive Interaktion des Bedieners mit einem Schlüssel. Passive Zugangssysteme sind für den Bediener in vielerlei Hinsicht vorteilhaft. Beispielsweise entfällt eine Suche nach dem Schlüssel und auch freihändiges Auslösen einer Funktion, beispielsweise ein Öffnen einer Tür, sind möglich.

Bekannte passive Zugangssysteme, je nach Funktionsumfang oft auch als sogenannte Keyless-Entry oder Passive-Entry-Go-Systeme bezeichnet, basieren dabei auf einem Austausch eines elektronischen Codes mittels Funkkommunikation.

Um eine Funktionsauslösung durch einen Unberechtigten zu vermeiden, weisen viele passive Zugangssysteme eine als minimal ausgelegte Sendeleistung der beteiligten Sendevorrichtungen als Sicherheitsmerkmal auf. Durch die Minimierung der Sendeleistung wird erreicht, dass eine Kommunikation zwischen einer kraftfahrzeugseitigen Sende- und Empfangsstation und einem ID-Geber des Bedieners nur möglich ist, wenn sich der Bediener in der Nähe des Kraftfahrzeugs befindet.

Dieser Sicherheitsmechanismus kann jedoch prinzipiell umgangen werden. Ein bekannter Ansatz, mittels dem Unberechtigte eine Funktion auslösen können, ist als sogenannte Relay-Attacke (Relay Station Attack) bekannt. Eine Relay-Attacke verlängert den Funkweg zwischen ID-Geber und Kraftfahrzeug. Dazu wird zwischen ID-Geber und Kraftfahrzeug eine Signalwegverlängerung, eine sogenannte Relay-Station, positioniert. So wird dem Steuergerät des Kraftfahrzeugs vorgetäuscht, dass der ID-Geber sich in seiner Nähe befindet. In der Folge kann die Auslösung der Funktion herbeigeführt werden, ohne dass der entfernte Bediener dies beabsichtigt oder überhaupt bemerkt.

Vor diesem Hintergrund werden Anstrengungen unternommen, Angriffe durch Relay-Attacken erkennen zu können und diesen vorzubeugen.

Ein Beispiel für ein Verfahren, mit dem ein Weiterleiten von Funksignalen mittels einer Relay-Station erkannt werden kann, ist der DE 101 06 736 A1 zu entnehmen. Bei einer bidirektionalen, kontaktlosen Datenübertragung zwischen einer ersten Sende- und Empfangseinheit und einer zweiten Sende- und Empfangseinheit wird zunächst ein Fragesignal durch die erste Sende- und Empfangseinheit ausgesendet. Bei Ankunft bei der zweiten Sende- und Empfangseinheit wird die Amplitude des Fragesignals vermessen. Anschließend wird der Wert der Amplitude des Fragesignals mit einem Antwortsignal von der zweiten Sende- und Empfangseinheit an die erste Sende- und Empfangseinheit gesendet. Bei Ankunft des Antwortsignals bei der ersten Sende- und Empfangseinheit wird wiederum die Amplitude des Antwortsignals vermessen. Ein Vergleich der beiden Amplituden ermöglicht die Erkennung, ob eine Weiterleitung des Signals vorgelegen hat.

Dieses Verfahren weist jedoch den Nachteil auf, dass es relativ leicht umgehbar ist. Beispielsweise kann auch bei einer Weiterleitung durch entsprechende Auswahl der Position der Relay-Station sowie durch entsprechende Einstellung der Weiterleitungsparameter die Amplitude eines weitergeleiteten Signals entsprechend des bei Ankunft erwarteten Werts eingestellt werden. DE102005058041 zeigt ein Verfahren zum Betreiben eines Zugangssicherungssystems. EP0980800 zeigt ein Verfahren zum Betreiben einer Diebstahlschutzeinrichtung.

Die vorliegende Erfindung stellt hat die Aufgabe, das Auslösen einer Funktion eines Kraftfahrzeugs mittels eines passiven Zugangssystems zu ermöglichen und ein erhöhtes Maß an Schutz vor Manipulationen bereitzustellen.

Die genannte Aufgabe wird durch ein Verfahren mit den Merkmalen des Patentanspruchs 1 gelöst. Vorteilhafte Ausgestaltungen ergeben sich aus den Unteransprüchen.

Die Erfindung betrifft ein Verfahren zum Auslösen einer Funktion eines Kraftfahrzeugs. Das Auslösen der Funktion erfolgt mittels eines passiven Zugangssystems. Das passive Zugangssystem umfasst ein kraftfahrzeugseitiges Steuergerät, das mit wenigstens einer ersten HF(Hochfrequenz)-Sende- und Empfangsstation und einer zweiten HF-Sende- und Empfangsstation gekoppelt ist. Die erste HF-Sende- und Empfangsstation und die zweite HF-Sende- und Empfangsstation sind voneinander beabstandet am Kraftfahrzeug angeordnet.

Unter HF (Hochfrequenz) ist im Rahmen dieser Anmeldung eine elektromagnetische Welle mit Frequenzen im Bereich oberhalb von 500 MHz zu verstehen, beispielsweise im Bereich einiger GHz, wie z.B. Kommunikation gemäß dem Bluetooth-Standard.

Das passive Zugangssystem umfasst weiterhin einen ID-Geber mit einem Mikrocontroller und mit einer von dem Mikrocontroller gesteuerten HF-Sende- und Empfangsschaltung des ID-Gebers. Die HF-Sende- und Empfangsschaltung ist zur Kommunikation mit dem kraftfahrzeugseitigen Steuergerät eingerichtet.

Das Verfahren sieht vor, dass das Steuergerät und der ID-Geber vor dem Auslösen der Funktion einen Authentifizierungsprozess untereinander durchführen. Der Authentifizierungsprozess prüft, ob der ID-Geber einen zum Auslösen der Funktion berechtigter ID-Geber ist.

Der Authentifizierungsprozess umfasst für jede der ersten HF-Sende- und Empfangsstation und der zweiten HF-Sende- und Empfangsstation die folgenden Schritte:
a) Ein kraftfahrzeugseitiges HF-Signals wird mit vorgegebener Sendesignalstärke S_KFZ von der HF-Sende- und Empfangsstation aus ausgesendet. Das kraftfahrzeugseitige HF-Signal wird von dem ID-Geber empfangen. Weiterhin wird ein ID-Geber-seitiges HF-Signal mit vorgegebener Sende-Signalstärke S_ID ausgesendet, das von der HF-Sende- und Empfangsstation empfangen wird.
   Zwischen zwei Stationen, wobei sich eine im oder am Fahrzeug befindet und dem mobilen ID-Geber werden also in beiden Richtungen Signale ausgetauscht.
b) Die Empfangssignalstärke E_KFZ des kraftfahrzeugseitigen HF-Signals an der Position des ID-Gebers wird im ID-Geber erfasst, z.B. mittels des Mikrocontrollers des ID-Gebers. Weiterhin erfolgt ein Übermitteln der Empfangssignalstärke E_KFZ an das kraftfahrzeugseitige Steuergerät.
c) Eine Empfangssignalstärke E_ID des ID-Geber-seitigen HF-Signals an der Position der HF-Sende- und Empfangsstation wird mittels des kraftfahrzeugseitigen Steuergeräts erfasst.
d) Die Signalschwächung des kraftfahrzeugseitigen HF-Signals wird mit der Signalschwächung des ID-Geber-seitigen HF-Signals verglichen.

Dabei ist klar, dass das Senden von S_KFZ und S_ID prinzipiell in beliebiger Reihenfolge oder auch teilweise oder vollständig gleichzeitig erfolgen können. Der zeitliche Ablauf des Erfassens von E_KFZ und E_ID ergibt sich aus dem Senden von S_KFZ und S_ID.

Das Verfahren bezieht sich auf eine bidirektionale HF-Kommunikation. Es findet zum einen eine Datenübertragung zwischen der HF-Sende- und Empfangsstation und dem ID-Geber in Richtung des ID-Gebers und zum anderen in Richtung der HF-Sende- und Empfangsstation statt.

Der Begriff der vorgegebenen Sendesignalstärke bezieht sich dabei auf die nominelle Sendesignalstärke, mit der ein Aussenden des Sendesignals veranlasst wird.

Dass die Signalstärke vorgegeben ist, ist dahingehend zu verstehen, dass das Sendesignal nicht willkürlich ausgegeben wird, sondern in definierter Weise und reproduzierbar emittiert wird. Insbesondere kann vorgegeben sein, dass eine Sendeleistung eingestellt werden kann, so dass bei ebenfalls eingestellter Frequenz die gewünschte Amplitude erreicht wird, was beispielsweise durch einmalige empirische Kalibrierung sichergestellt werden kann. Dabei ist nicht notwendigerweise erforderlich, dass die tatsächlich erreichte Sendesignalstärke bekannt ist. Stattdessen kann beispielsweise auch ausreichend sein, dass experimentell ermittelte Sendesignale reproduziert ausgegeben werden.

Das erfindungsgemäße Verfahren beruht auf der Grundlage, dass der Sendegang elektromagnetischer Strahlen ortssymmetrisch ist. Das bedeutet insbesondere, dass das Senden eines HF-Signals von der HF-Sende- und Empfangsstation aus zu dem ID-Geber in gleicher Weise zu einer Veränderung des HF-Signals entlang der Signalstrecke führt, wie im umgekehrten Fall das Senden von dem ID-Geber zu der HF-Sende- und Empfangsstation. Das bedeutet, dass eine Schwächung des Signals in die eine Richtung und eine Schwächung des Signals in die andere Richtung in analoger Weise verlaufen. Ein Vergleichen der Signalschwächung des kraftfahrzeugseitigen HF-Signals mit der Signalschwächung des ID-Geber-seitigen HF-Signals ermöglicht daher, zu erkennen, ob ein Weiterleiten erfolgt oder nicht.

Jeder der Schritte a) bis d) erfolgt für jede der ersten Sende- und Empfangsstation und der zweiten Sende- und Empfangsstation. Der Vergleich der Signalschwächung auf dem Hinweg zu dem ID-Geber als auch zu dem Rückweg zu der jeweiligen Sende- und Empfangsstation erfolgt separat. Da die HF-Sende- und Empfangsstationen voneinander beabstandet sind, ist ein Positionieren einer Relay-Station derart, dass der Vergleich der Dämpfungen nicht zu ihrer Entdeckung führt, deutlich erschwert.

Die voneinander beabstandete Positionierung der ersten HF-Sende- und Empfangsstation und der zweiten HF-Sende- und Empfangsstation ist dabei für eine konkrete Anwendung auszulegen. Dabei können beispielsweise verwendete Frequenzen und die individuell für erforderlich erachtete Genauigkeit in Abwägung mit der Inkaufnahme von Fehlalarmen berücksichtigt werden. Da diese individuellen Begebenheiten für jeden konkreten Anwendungsfall spezifisch sein können, sind sie nicht konkret darstellbar, können aber von einem Fachmann empirisch ermittelt werden.

Das Erfassen einer Empfangssignalstärke ist erfindungsgemäß dahingehend zu verstehen, dass nicht notwendigerweise sämtliche zur Beschreibung der Signalstärke der Signale möglichen oder erforderlichen Parameter zu messen sind. Stattdessen kann vorgesehen sein, dass nur einer oder mehrere aussagekräftige Parameter bestimmt werden, welche die Empfangssignalstärke repräsentieren. Insbesondere kann vorgesehen sein, dass eine Wellenamplitude des HF-Signals bestimmt wird, dass also die Empfangssignalstärke eine Wellenamplitude des elektromagnetischen Signals ist.

Beispielsweise kann vorgesehen sein, dass von der vorgegebenen Sendesignalstärke S_KFZ die Amplitude des von der HF-Sende- und Empfangsstation aus in Richtung ID-Geber gesendeten HF-Signals bekannt ist. Weiterhin kann vorgesehen sein, dass von der vorgegebenen Sendesignalstärke S_ID die Amplitude des von dem ID-Geber ausgesendeten HF-Signals bekannt ist. Alternativ kann auch vorgesehen sein, dass ausschließlich ein Verhältnis der beiden Amplituden bekannt ist; insbesondere kann beispielsweise vorgesehen sein, dass bekannt ist, dass die Amplituden gleich sind. Auf diese Weise kann der messtechnische und/oder entwicklerische Aufwand zur Bereitstellung des erfindungsgemäßen Verfahrens in beträchtlichem Maße reduziert werden, da auf eine Festlegung und/oder Bestimmung der Signalstärken verzichtet werden kann.

Weiterhin kann in einer Ausführungsform vorgesehen sein, dass die Empfangssignalstärke E_ID von einer von der HF-Sende- und Empfangsstation erfassten Amplitude des HF-Signals repräsentiert wird, welches von dem ID-Geber ausgesendet wurde. Analog kann vorgesehen sein, dass die Empfangssignalstärke E_KFZ durch eine von dem ID-Geber erfasste Amplitude des HF-Signals repräsentiert wird, das von der HF-Sende- und Empfangsstation zu dem ID-Geber hin gesendet wird.

Für den beispielhaften Fall, dass die erfassten Empfangssignalstärken sowie die Sendesignalstärken jeweils durch Amplituden repräsentiert werden, kann ein Vergleichen erfolgen, indem die Amplituden in ein Verhältnis miteinander gesetzt werden, beispielsweise durch Quotientenbildung. In dem Fall, dass keine Relay-Station den Sendegang zwischen HF-Sende- und Empfangsstation und ID-Geber beeinträchtigt, wird erwartet, dass das Verhältnis aus Empfangssignalstärke E_KFZ zu Sendesignalstärke S_KFZ identisch ist mit dem Verhältnis aus Empfangssignalstärke E_ID und Sendesignalstärke S_ID.

Um das Vergleichen der Signalschwächung zu ermöglichen, ist erforderlich, dass ein Zugriff auf alle der Werte S_KFZ, E_KFZ, S_ID und E_ID an einem Ort möglich ist. Aus diesem Grunde erfolgt erfindungsgemäß das Übermitteln der Empfangssignalstärke E_KFZ an das kraftfahrzeugseitige Steuergerät. Das Übermitteln der Empfangssignalstärke E_KFZ erfolgt vorzugsweise ebenfalls mittels HF-Signal über die HF-Sende- und Empfangsschaltung des ID-Gebers.

Das Erfassen der Empfangssignalstärke E_KFZ erfolgt mittels des Mikrocontrollers des ID-Gebers. Dies ist dahingehend zu verstehen, dass der Mikrocontroller an dem Erfassen beteiligt ist. Dabei ist nicht ausgeschlossen, dass nicht auch weitere Bauteile an dem Erfassen beteiligt sind. Das Erfassen der Empfangssignalstärke E_ID erfolgt mittels des kraftfahrzeugseitigen Steuergeräts. Dies schließt nicht aus, dass nicht auch weitere Mittel an dem Erfassen der Empfangssignalstärke beteiligt sind.

Der beschriebene Authentifizierungsprozess, der die Schritte a) bis d) umfasst, wird für jede der ersten HF-Sende- und Empfangsstation und der zweiten HF-Sende- und Empfangsstation durchgeführt. Der Authentifizierungsprozess kann insbesondere umfassen, dass ein erfolgreiches Authentifizieren zwingend vorrausetzt, dass ein Vergleichen der Signalschwächung des kraftfahrzeugseitigen HF-Signals mit der Signalschwächung des ID-Geber-seitigen HF-Signals ergibt, dass die erfassten Signalschwächungen plausibel sind mit einer Situation, in der keine Relay-Station zwischen ID-Geber und HF-Sende- und Empfangsstation positioniert ist.

In der beispielhaften Konstellation, dass die Sendesignalstärke S_KFZ und die Sendesignalstärke S_ID gleich hoch sind, setzt das erfolgreiche Authentifizieren voraus, dass die Signalschwächung des kraftfahrzeugseitigen HF-Signals im Rahmen einer tolerierten Abweichung identisch ist mit der Signalschwächung des ID-Geber-seitigen HF-Signals. Dies schließt selbstverständlich nicht aus, dass gegebenenfalls auch weitere erforderliche Voraussetzungen für ein erfolgreiches Absolvieren des Authentifizierungsprozesses gefordert werden können.

In einer Weiterbildung des Verfahrens kann beispielsweise vorgesehen sein, dass das kraftfahrzeugseitige HF-Signal und/oder das ID-Geber-seitige HF-Signal mit einer vorbekannten Sendeleistungsvorgabe ausgesendet werden.

Dass die Sendeleistungsvorgabe vorbekannt ist, ist in dem vorliegenden Kontext dahingehend zu verstehen, dass der konkrete Wert der Sendeleistung bekannt ist. Hierdurch ergibt sich der Vorteil, dass neben einem bloßen Vergleichen der Signalschwächungen in die eine Richtung mit der Signalschwächung in die andere Richtung zusätzlich eine Berechnung auf Grundlage der absolut vorliegenden Werte vorgenommen werden kann. So kann beispielsweise in einem Fall, dass die Leistung, die Amplitude und die Frequenz bekannt sind, eine zusätzliche Plausibilisierung vorgenommen werden, indem die empfangenen Signale auf etwaige Frequenzänderungen hin ausgewertet werden.

Gemäß einer anderen vorteilhaften Weiterbildung des Verfahrens wird das ID-Geber-seitige HF-Signal mit einer Sendeleistungsvorgabe ausgesendet. Diese Sendeleistungsvorgabe wird an das kraftfahrzeugseitige Steuergerät übermittelt. Bevorzugt wird die Sendeleistungsvorgabe mit dem ID-Geber-seitigen HF-Signal dem kraftfahrzeugseitigen Steuergerät übermittelt.

Wenn die Sendeleistungsvorgabe für das ID-Geber-seitige HF-Signal an das kraftfahrzeugseitige Steuergerät übermittelt ist, liegen dem kraftfahrzeugseitigen Steuergerät gemeinsam mit der bereits vorhandenen Sendeleistungsvorgabe für das kraftfahrzeugseitige HF-Signal Informationen vor, die in den Vergleich der Signalschwächung des kraftfahrzeugseitigen HF-Signals mit der Signalschwächung des ID-Geber-seitigen HF-Signals einbezogen werden können. Insbesondere kann bei Kenntnis der Sendeleistungsvorgabe und bei bekannter Frequenz auf eine Anfangsamplitude geschlossen werden. In einer Ausgestaltung kann vorgesehen sein, dass hierfür erforderliche Informationen in dem kraftfahrzeugseitigen Steuergerät oder einem mit diesem verbundenen Speicherelement hinterlegt sind.

Eine Weiterbildung des Verfahrens sieht vor, dass das kraftfahrzeugseitige HF-Signal und das ID-Geber-seitige HF-Signal mit einer gleichen Sendeleistungsvorgabe ausgesendet werden. Das Vorhandensein einer gleichen Sendeleistungsvorgabe geht mit dem Vorteil einher, dass das Vergleichen der Signalschwächung des kraftfahrzeugseitigen HF-Signals mit der Signalschwächung des ID-Geber-seitigen HF-Signals reduziert werden kann auf ein Vergleichen der Empfangssignalstärke E_ID mit der Empfangssignalstärke E_KFZ.

Es kann beispielsweise vorgesehen sein, dass die Differenz aus Empfangssignalstärke E_KFZ und Empfangssignalstärke E_ID gebildet wird. Der Authentifizierungsprozess kann den ID-Geber dann unter der Voraussetzung als berechtigten ID-Geber ausweisen, dass der Absolutbetrag der Differenz einen vorgegebenen Schwellwert unterschreitet.

Alternativ oder zusätzlich kann vorgesehen sein, dass ein Quotient aus Empfangssignalstärke E_KFZ und Empfangssignalstärke E_ID gebildet wird und dass der Authentifizierungsprozess den ID-Geber als berechtigten ID-Geber unter der Voraussetzung ausweist, dass der Absolutbetrag des Quotienten von dem Wert 1 um höchstens einen vorgegebenen Toleranzwert abweicht.

Die Höhe des vorgegebenen Schwellwerts bzw. die Höhe des vorgegebenen Toleranzwerts ist bei der Implementierung des Verfahren zu treffen, wobei berücksichtigt werden kann wie groß die angestrebte Genauigkeit des Verfahrens und wie hoch die tolerierten Fehlauswertungen sind. Weiterhin können verwendete Frequenzen sowie die tatsächliche konstruktive Anordnung, insbesondere der HF-Sende- und Empfangsstation, eingehen.

In einer Ausgestaltung des Verfahrens ist vorgesehen, dass die Empfangssignalstärke E_KFZ mit dem ID-Geber-seitigen HF-Signal an das kraftfahrzeugseitige Steuergerät übermittelt wird. Durch das Versenden der Empfangssignalstärke E_KFZ mit dem ID-Geber-seitigen HF-Signal wird die Übermittlung von E_KFZ an das Steuergerät mit einem wesentlichen Verfahrensschritt verknüpft, wodurch das Verfahren zeiteffizient implementiert werden kann.

Gemäß einem weiteren vorteilhaften Verlauf des Verfahrens ist vorgesehen, dass das passive Zugangssystem eine Anzahl von wenigstens drei kraftfahrzeugseitigen HF-Sende- und Empfangsstationen aufweist, die mit dem kraftfahrzeugseitigen Steuergerät gekoppelt sind. Weiterhin ist vorgesehen, dass die Schritte a) bis d) jeweils für mehrere der HF-Sende- und Empfangsstation durchgeführt werden. In besonders vorteilhafter Weise ist vorgesehen, dass die Schritte a) bis d) für jede der HF-Sende- und Empfangsstation durchgeführt werden.

Das bedeutet, dass der geschilderte Verfahrensablauf für jede HF-Sende- und Empfangsstation unabhängig voneinander mit dem ID-Geber erfolgt. Dadurch, dass mehr als eine HF-Sende- und Empfangsstation vorgesehen ist, bevorzugt mindestens drei HF-Sende- und Empfangsstationen, wird deutlich erschwert, dass dem Steuergerät entgegen der tatsächlichen Verhältnisse vorgetäuscht werden kann, dass keine Relay-Station in den Signalverlauf eingebunden ist.

Nach den bisherigen Kenntnissen kann davon ausgegangen werden, dass das erfindungsgemäße Verfahren, insbesondere in der genannten Weiterbildung, einen erheblichen Gewinn an Sicherheit vor Relay-Attacken im Anwendungsbereich der passiven Zugangssysteme bietet.

Eine Weiterbildung des Verfahrens sieht vor, dass das Vergleichen der Signalschwächung des kraftfahrzeugseitigen HF-Signals mit der Signalschwächung des ID-Geber-seitigen HF-Signals mittels des kraftfahrzeugseitigen Steuergeräts vorgenommen wird. Da das kraftfahrzeugseitige Steuergerät in einem modernen Kraftfahrzeug ohnehin vorhanden ist und in aktuellen Fahrzeugen eine ausreichende Rechenleistung aufweisen, führt eine derartige Vorgehensweise zu einem geringen apparativen Mehraufwand. Der Vergleich und das Berechnen finden innerhalb des Steuergeräts des Kraftfahrzeugs statt. Damit wird eine wesentliche Funktion der Authentifizierungsprüfung in einer Gerätschaft beziehungsweise an einem Ort durchgeführt, der als nicht kompromittiert vorausgesetzt werden kann.

Insbesondere kann vorgesehen sein, dass zur bidirektionalen HF-Kommunikation zwischen dem kraftfahrzeugseitigen Steuergerät und dem ID-Geber ein Protokoll des dem Fachmann bekannten Bluetooth-Standards genutzt wird. Der Bluetooth-Standard hat den Vorteil, dass er in vielen heutzutage erhältlichen Endgeräten und auch Vorprodukten, wie beispielsweise zukaufbaren Chipsätzen, bereits implementiert ist.

Insbesondere kann vorgesehen sein, dass der ID-Geber als Smartphone ausgebildet ist. Viele Bediener verfügen ohnehin über ein Smartphone und empfinden dessen Nutzung als komfortabel.

Zum Erfassen der Empfangssignalstärke E_KFZ und/oder der Empfangssignalstärke E_ID kann eine RSSI-Bestimmung beziehungsweise alternativ oder zusätzlich eine RX-Bestimmung vorgesehen sein.

Weitere Einzelheiten, Merkmale und Vorteile des Gegenstands der Erfindung ergeben sich aus der nachfolgenden Beschreibung im Zusammenhang mit den Zeichnungen. In den Zeichnungen ist beispielhaft ein Ausführungsbeispiel der Erfindung dargestellt.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind.

Es zeigen:
Fig. 1a: Schematische Darstellung einer beispielhaften Ausführung des Verfahrens gemäß Stand der Technik;
Fig. 1b: Schematische Darstellung einer beispielhaften Ausführung des Verfahrens gemäß Stand der Technik im Falle einer Relay-Attacke;
Fig. 2a: Schematische Darstellung einer beispielhaften Ausführung des erfindungsgemäßen Verfahrens;
Fig. 2b: Schematische Darstellung einer beispielhaften Ausführung des erfindungsgemäßen Verfahrens im Falle einer Relay-Attacke.

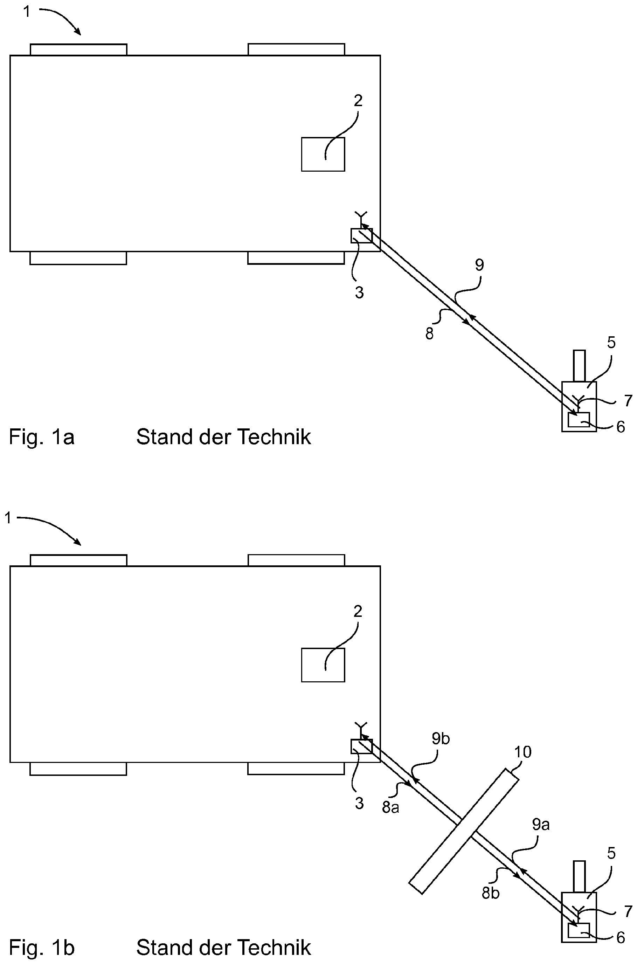

Fig. 1a ist eine repräsentative Darstellung einer Konstellation zu entnehmen, wie sie bei einer Durchführung des aus dem Stand der Technik bekannten Verfahrens darstellt. Dargestellt ist ein Kraftfahrzeug 1, das ein kraftfahrzeugseitiges Steuergerät 2 aufweist. An dem Kraftfahrzeug 1 angeordnet und mit dem kraftfahrzeugseitigen Steuergerät 2 gekoppelt ist eine HF-Sende- und Empfangsstation 3. Bei Annähern eines Bedieners, der einen geeigneten ID-Geber 5 besitzt, auf einen Höchstabstand vom Kraftfahrzeug wird ein Authentifizierungsprozess zwischen Steuergerät 2 des Kraftfahrzeugs und ID-Geber 5 gestartet. In dessen Rahmen wird ein kraftfahrzeugseitiges HF-Signal 8 mit einer

Sendesignalstärke S_KFZ ausgesendet. Das kraftfahrzeugseitige HF-Signal 8 wird von der Sende- und Empfangsschaltung 7 des ID-Gebers 5 empfangen. Die Empfangssignalstärke E_KFZ wird unter Einbindung des Mikrocontrollers 6 erfasst. Die Empfangssignalstärke E_KFZ bezieht sich in dem gezeigten Beispiel auf eine Amplitude des kraftfahrzeugseitigen HF-Signals 8 am Ort des ID-Gebers 5. Das Empfangen des kraftfahrzeugseitigen HF-Signals 8 wird in der Implementation des gezeigten Beispiels von dem ID-Geber 5 als Anfrage eines Antwortsignals des ID-Gebers 5 interpretiert. Die Antwort erfolgt, indem der ID-Geber 5 das Aussenden eines ID-Geber-seitigen HF-Signals 9 veranlasst. Das ID-Geber-seitige HF-Signal 9 weist eine vorgegebene Sendesignalstärke S_ID auf. Das ID-Geber-seitige HF-Signal 9 wird von der HF-Sende- und Empfangsstation 3 empfangen. Seine Empfangssignalstärke E_ID an der Position der HF-Sende- und Empfangsstation 3 wird erfasst. In dem dargestellten Beispiel ist dem Steuergerät 2 aufgrund der entsprechenden Implementation des Verfahrens vorbekannt, dass beide HF-Signale mit einer gleichen Sendeleistungsvorgabe ausgesendet werden. Der Vergleich wird von dem Steuergerät 2 also unter der Annahme durchgeführt, dass beide

Sendesignalstärken gleich sind. Das Steuergerät kann nun einen Vergleich der Empfangssignalstärke E_ID und der

Empfangssignalstärke E_KFZ vornehmen. Da die Sendesignalstärken gleich waren, müssen aufgrund der gleichen zurückgelegten Strecke auch die Empfangssignalstärke E_KFZ und die Empfangssignalstärke E_ID gleich sein. Nachdem das Steuergerät 2 festgestellt hat, dass die Empfangssignalstärken gleich sind, veranlasst das Steuergerät 2 als Reaktion die Ausgabe eines Ausgabesignals, welches den Authentifizierungsprozess als bestanden kennzeichnet. Das Ausgabesignal kann für die Veranlassung zum Auslösen einer Funktion genutzt werden.

Fig. 1b unterscheidet sich von Fig. 1a dahingehend, dass in dem Signalweg des kraftfahrzeugseitigen HF-Signals 8 und des ID-Geber-seitigen HF-Signals 9 eine Relay-Station 10 eingebracht wurde. Die Positionierung der Relay-Station 10 ist dabei derart gewählt, dass die Relay-Station 10 die Strecke zwischen der ersten HF-Sende- und Empfangsstation 3 und ID-Geber 5 hälftig teilt. Das kraftfahrzeugseitige HF-Signal 8 verläuft somit entlang einer Teilstrecke 8a und einer Teilstrecke 8b, während das ID-Geber-seitige HF-Signal 9 entlang einer Teilstrecke 9a und einer Teilstrecke 9b verläuft. Anstelle einer Empfangssignalstärke E_KFZ erfasst der ID-Geber aufgrund der Weiterleitung eine Empfangssignalstärke E_KFZ', welche sich aus der Empfangssignalstärke des kraftfahrzeugseitigen HF-Signals an der Position der Relay-Station 10, einer Verstärkung oder Dämpfung des Signals durch die Relay-Station 10 sowie eine Dämpfung des von der Relay-Station weitergeleiteten HF-Signals auf der Strecke 8b ergibt. Der ID-Geber veranlasst nach Empfang des kraftfahrzeugseitig ausgesendeten HF-Signals, dass der Wert E_KFZ' zum Zwecke der späteren Auswertung an das Steuergerät 2 weitergeleitet wird. Analog erfasst das Steuergerät 2 den Wert E_ID', welcher sich aus der Dämpfung entlang der Strecke 9a, der Verstärkung oder Dämpfung durch die Relay-Station sowie der erneuten Dämpfung entlang der Strecke 9b ergibt. Da die Dämpfung entlang jeder der Teilstrecken 8a, 8b, 9a sowie 9b identisch ist und auch davon ausgegangen werden kann, dass eine Verstärkung oder Dämpfung an der Relay-Station identisch ist, wird ein Vergleichen von E_KFZ' mit E_ID' zu dem Ergebnis führen, dass die Signalschwächung des ID-geberseiteigen HF-Signals gleich der Signalschwächung des KFZ-seitigen HF-Signals ist. Der Vergleich ist in der speziellen Konstellation der Fig. 1b also plausibel mit der falschen Annahme, dass keine Relay-Attacke vorliegt. Die in Fig. 1b dargestellte Konstellation zeigt als

Gedankenexperiment, dass das Verfahren gemäß Stand der Technik in bestimmten Konstellationen nicht zur Entdeckung einer Relay-Attacke ausreichend ist. Bei komplexeren Konstellationen, die sich beispielsweise bei unterschiedlichen Sendesignalstärken S_KFZ und S_ID ergeben, ist ein falsches Ergebnis ebenfalls noch möglich, indem die Position der Relay-Station entsprechend angepasst wird.

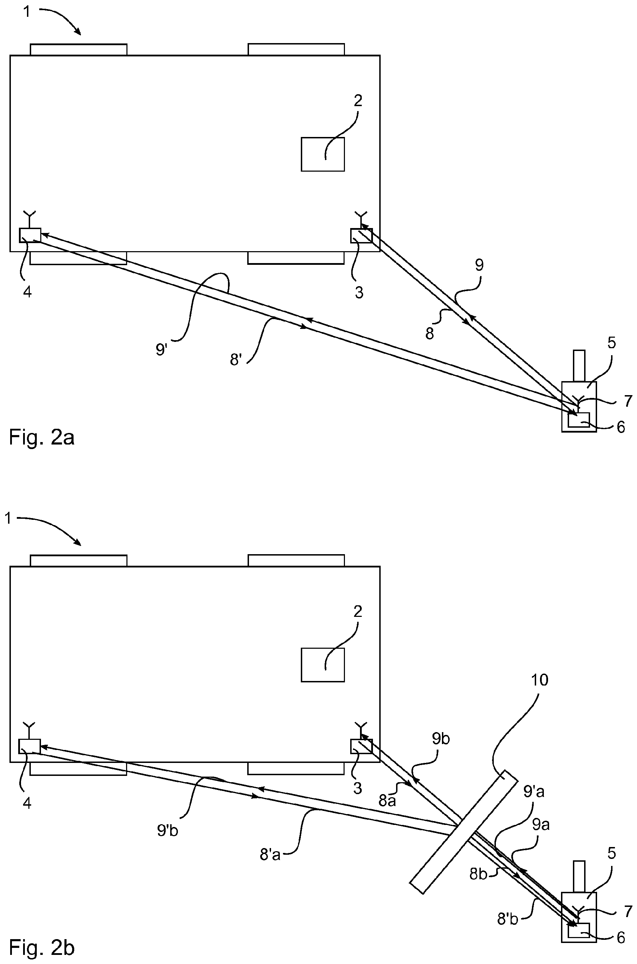

Fig. 2a ist eine repräsentative Darstellung zu entnehmen, die eine Durchführung des Verfahrens gemäß vorliegender

Erfindung erlaubt. Fig. 2a ist zu entnehmen, dass zusätzlich zu der ersten HF-Sende- und Empfangsstation 3 eine zweite HF-Sende- und Empfangsstation 4 vorgesehen ist.

Fig. 2b weist eine Anordnung auf, in der eine Relay-Station zwischen dem Kraftfahrzeug 1 und dem ID-Geber 5 positioniert ist. Die Position der Relay-Station entspricht dabei der bereits in Fig. 1b dargestellten Anordnung und entspricht der Hälfte der Strecke zwischen der ersten HF-Sende und Empfangsstation 3 und dem ID-Geber 5. Im Rahmen eines auf Fig. 2b zu entnehmenden Gedankenexperiments wird der einfache Fall angenommen, dass das kraftfahrzeugseitige Signal und das von dem ID-Geber 5 aus gesendete Signal mit einer gleichen Amplitude ausgesendet werden. Analog zu den Erläuterungen zu Fig. 1b führt ein Vergleich der Signalschwächung des kraftfahrzeugseitigen HF-Signals, ausgehend von der ersten HF-Sende- und Empfangsstation 3 entlang der Signalstrecke 8 (zusammengesetzt aus Teilstrecken 8a und 8b) und des ID-Geber-seitigen HF-Signals entlang der Signalstrecke 9 (zusammengesetzt aus der Signalstrecke 9a und 9b) hin zu der ersten Sende- und Empfangsstation wieder zu dem - in diesem Fall falschen - Ergebnis, dass keine Relay-Station in den Signalweg eingebracht ist. Entlang der Strecke 8', die von der zweiten HF-Sende- und Empfangsstation 4 aus zu dem ID-Geber verläuft sowie in umgekehrter Richtung entlang der Strecke 9' führt der Vergleich der Signalschwächungen zu einem anderen Ergebnis: Dadurch, dass die Teilstrecken 8'a und 8'b sowie die Teilstrecken 9'a und 9'b sich in ihrer Länge jeweils deutlich unterscheiden, ist das Dämpfungsverhalten vor und hinter der Relay-Station im Gegensatz zu der Konstellation der Fig. 1b asymmetrisch. Durch Vergleich der Signalschwächung des kraftfahrzeugseitigen HF-Signals mit der Signalschwächung des ID-Geber-seitigen HF-Signals erkennt das Steuergerät 2, dass aus Sicht der zweiten HF-Sende- und Empfangsstation 4 unterschiedliche Strecken zurückgelegt sind. Für eine der beiden Sende- und Empfangsstationen hat das Vergleichen der Signalschwächungen somit zu dem Ergebnis geführt, dass eine Relay-Station eine Signalweiterleitung vornimmt. Das

Authentifizierungsverfahren wird nicht erfolgreich abgeschlossen.

## Patentansprüche

1. Verfahren zum Auslösen einer Funktion eines Kraftfahrzeugs (1) mittels eines passiven Zugangssystems,
wobei das passive Zugangssystem umfasst:
- ein kraftfahrzeugseitiges Steuergerät (2), das mit wenigstens einer ersten HF-Sende- und Empfangsstation (3) und einer zweiten HF-Sende- und Empfangsstation (4) gekoppelt ist, die voneinander beabstandet am Kraftfahrzeug angeordnet sind,
- einen ID-Geber (5) mit einem Mikrocontroller (6) und mit einer von dem Mikrocontroller gesteuerten HF-Sende- und Empfangsschaltung (7) des ID-Gebers (5) zur Kommunikation mit dem kraftfahrzeugseitigen Steuergerät (2);
wobei vor dem Auslösen der Funktion das Steuergerät (2) und der ID-Geber (5) einen Authentifizierungsprozess untereinander durchführen zur Prüfung, ob der ID-Geber (5) ein zum Auslösen der Funktion berechtigter ID-Geber (5) ist,
wobei der Authentifizierungsprozess für jede der ersten HF-Sende- und Empfangsstation (3) und der zweiten HF-Sende- und Empfangsstation (4) die folgenden Schritte umfasst:
a) Aussenden eines kraftfahrzeugseitigen HF-Signals (8, 8') mit jeweils vorgegebener Sendesignalstärke S_KFZ von der HF-Sende- und Empfangsstation (3, 4) aus, wobei das HF-Signal von dem ID-Geber (5) empfangen wird,
b) Aussenden eines ID-Geber-seitigen HF-Signals (9, 9') mit vorgegebener Sendesignalstärke S_ID an die HF-Sende- und Empfangsstation, wobei das das HF-Signals von der HF-Sende- und Empfangsstation (3, 4) empfangen wird,
c) Erfassen einer Empfangssignalstärke E_KFZ der kraftfahrzeugseitigen HF-Signale (8, 8') an der Position des ID-Gebers (5) und Übermitteln der Empfangssignalstärke E_KFZ an das kraftfahrzeugseitige Steuergerät (2),
d) Erfassen einer Empfangssignalstärke E_ID des ID-Geber-seitigen HF-Signals (9, 9') an der HF-Sende- und Empfangsstation (3, 4) und übermitteln der Empfangssignalstärken an das kraftfahrzeugseitige Steuergerät (2),
e) Vergleichen einer Signalschwächung des kraftfahrzeugseitigen HF-Signals (8, 8') von der HF-Sende- und Empfangsstationen mit der Signalschwächung des dort empfangenen zugehörigen ID-Geber-seitigen HF-Signals (9, 9').

2. Verfahren nach Anspruch 1, **dadurch gekennzeichnet, dass** das kraftfahrzeugzeitige HF-Signal (8, 8') und/oder das ID-Geber-seitige HF-Signal (9, 9') mit einer vorbekannten Sendeleistungsvorgabe ausgesendet werden.

3. Verfahren nach einem der vorhergehenden Ansprüche, **dadurch gekennzeichnet, dass** das ID-Geber-seitige HF-Signal (9, 9') mit einer Sendeleistungsvorgabe ausgesendet wird und diese Sendeleistungsvorgabe an das kraftfahrzeugseitige Steuergerät (2) übermittelt wird, bevorzugt mit dem ID-Geber-seitigen HF-Signal (9, 9').

4. Verfahren nach einem der vorhergehenden Ansprüche, **dadurch gekennzeichnet, dass** die kraftfahrzeugzeitigen HF-Signale (8, 8') und die ID-Geber-seitigen HF-Signale (9, 9') mit gleicher Sendeleistungsvorgabe ausgesendet werden.

5. Verfahren nach Anspruch 4, **dadurch gekennzeichnet, dass** die Differenz aus Empfangssignalstärke E_KFZ und Empfangssignalstärke E_ID gebildet wird und der Authentifizierungsprozess den ID-Geber (5) nur dann als berechtigten ID-Geber (5) ausweist, wenn der Absolutbetrag der Differenz einen vorgegebenen Schwellwert unterschreitet und/oder
ein Quotient aus Empfangssignalstärke E_KFZ und Empfangssignalstärke E_ID gebildet wird und dass der Authentifizierungsprozess den ID-Geber (5) nur dann als berechtigten ID-Geber (5) ausweist, wenn der Absolutbetrag des Quotienten von dem Wert 1 um höchstens einen vorgegebenen Toleranzwert abweicht.

6. Verfahren nach einem der vorhergehenden Ansprüche, **dadurch gekennzeichnet, dass** die Empfangssignalstärke E_KFZ zusammen mit dem ID-Geber-seitigen HF-Signal (9, 9') an das kraftfahrzeugseitige Steuergerät (2) übermittelt wird.

7. Verfahren nach einem der vorhergehenden Ansprüche, **dadurch gekennzeichnet,**
**dass** das passive Zugangssystem eine Anzahl von wenigstens drei kraftfahrzeugseitigen HF-Sende- und Empfangsstationen (3, 4) aufweist, die mit dem kraftfahrzeugseitigen Steuergerät (2) gekoppelt sind, und
**dass** die Schritte a) bis d) jeweils für mehrere oder für jede der HF-Sende- und Empfangsstationen (3, 4) durchgeführt werden.

8. Verfahren nach einem der vorhergehenden Ansprüche, **dadurch gekennzeichnet, dass** das Vergleichen der Signalschwächung des kraftfahrzeugseitigen HF-Signals (8, 8') mit der Signalschwächung des ID-Geber-seitigen HF-Signals (9, 9') mittels des kraftfahrzeugseitigen Steuergeräts (2) vorgenommen wird.

9. Verfahren nach einem der vorhergehenden Ansprüche, **dadurch gekennzeichnet, dass** zur bidirektionalen HF-Kommunikation zwischen dem kraftfahrzeugseitigen Steuergerät (2) und dem ID-Geber (5) das Bluetooth-Protokoll genutzt wird.

10. Verfahren nach einem der vorhergehenden Ansprüche, **dadurch gekennzeichnet, dass** der ID-Geber (5) als Smartphone ausgebildet ist.

## Claims

1. Method for triggering a function of a motor vehicle (1) by means of a passive access system,
wherein the passive access system comprises:
- a control device (2) on the motor vehicle side, which is coupled to at least one first RF transmitting and receiving station (3) and a second RF transmitting and receiving station (4), which are positioned at a distance from each other on the motor vehicle,
- an ID transponder (5) with a microcontroller (6) and with an RF transmitting and receiving circuit (7) of the ID transponder (5) controlled by the microcontroller for communication with the control device (2) on the motor vehicle side;
wherein, before the function is triggered, the control device (2) and the ID transmitter (5) carry out an authentication process among themselves to check whether the ID transmitter (5) is an ID transmitter (5) authorized to trigger said function,
wherein the authentication process comprises the following steps for each of the first RF transmitting and receiving station (3) and the second RF transmitting and receiving station (4):
a) Transmitting an RF signal (8, 8') on the motor vehicle side with a respective predetermined transmission signal strength S_KFZ from the RF transmitting and receiving station (3, 4), the RF signal being received by the ID transmitter (5),
b) Transmitting an RF signal (9, 9') on the ID transmitter side with a predetermined transmission signal strength S_ID to the RF transmitting and receiving station, the RF signal being received by the RF transmitting and receiving station (3, 4),
c) Detecting a received signal strength E_KFZ of the RF signals (8, 8') on the vehicle side at the position of the ID transmitter (5) and transmitting the received signal strength E_KFZ to the control device (2) on the vehicle side,
d) Detecting a received signal strength E_ID of the RF signal (9, 9') on the ID transmitter side at the RF transmitting and receiving station (3, 4) and transmitting the received signal strengths to the control device (2) on the motor vehicle side,
e) Comparing a signal attenuation of the vehicle-side RF signal (8, 8') from the RF transmitting and receiving stations with the signal attenuation of the associated ID transmitter-side RF signal (9, 9') received there.

2. Method according to claim 1, **characterized in that** the RF signal (8, 8') on the vehicle side and/or the RF signal (9, 9') on the ID transmitter side are transmitted with a predetermined transmission power setting.

3. Method according to any one of the preceding claims, **characterized in that** the ID transmitter-side RF signal (9, 9') is transmitted with a transmission power specification and this transmission power specification is transmitted to the control device (2) on the motor vehicle side, preferably with the ID transmitter-side RF signal (9, 9').

4. Method according to one of the preceding claims, **characterized in that** the RF signals (8, 8') on the power vehicle side and the RF signals (9, 9') on the ID transmitter side are transmitted with the same transmission power setting.

5. Method according to claim 4, **characterized in that**
the difference between the received signal strength E_KFZ and the received signal strength E_ID is calculated and the authentication process only identifies the ID transponder (5) as an authorized ID transponder (5) if the absolute value of the difference is below a predetermined threshold value and/or
a quotient is calculated from the received signal strength E_KFZ and the received signal strength E_ID, and the authentication process only identifies the ID transponder (5) as an authorized ID transponder (5) if the absolute value of the quotient deviates from the value 1 by at most a predetermined tolerance value.

6. Method according to any one of the preceding claims, **characterized in that** the received signal strength E_KFZ is transmitted to the control device (2) on the motor vehicle side together with the ID transmitter-side RF signal (9, 9').

7. Method according to any one of the preceding claims, **characterized**
**in that** the passive access system has a number of at least three RF transmitting and receiving stations (3, 4) on the motor vehicle side which are coupled to the control device (2) on the motor vehicle side, and
**in that** the steps a) to d) are each carried out for several or for each of the RF transmitting and receiving stations (3, 4).

8. Method according to any one of the preceding claims, **characterized in that** the comparison of the signal attenuation of the RF signal (8, 8') on the motor vehicle side with the signal attenuation of the RF signal (9, 9') on the ID transmitter side is carried out by means of the control device (2) on the motor vehicle side.

9. Method according to any one of the preceding claims, **characterized in that** the Bluetooth protocol is used for bidirectional RF communication between the control device (2) on the motor vehicle and the ID transmitter (5).

10. Method according to any one of the preceding claims, **characterized in that** the ID transmitter (5) is designed as a smartphone.

## Revendications

1. Procédé pour déclencher une fonction d'un véhicule automobile (1) au moyen d'un système d'accès passif,
dans lequel le système d'accès passif comprend :
- une unité de commande (2) du côté du véhicule automobile, qui est couplée à au moins une première station d'émission et de réception RF (3) et une deuxième station d'émission et de réception RF (4), qui sont disposées à distance l'une de l'autre sur le véhicule automobile,
- un transpondeur d'identification (5) comportant un microcontrôleur (6) et un circuit d'émission et de réception RF (7), commandé par le microcontrôleur, du transpondeur d'identification (5) pour la communication avec l'unité de commande (2) du côté du véhicule à moteur ;
dans lequel, avant le déclenchement de la fonction, l'unité de commande (2) et le transpondeur (5) exécutent un processus d'authentification entre eux pour vérifier si le transpondeur (5) est un transpondeur (5) qui est autorisé à déclencher la fonction,
dans lequel le processus d'authentification comprend les étapes suivantes pour chacune de la première station d'émission et de réception RF (3) et de la seconde station d'émission et de réception RF (4) :
a) Transmettre un signal RF (8, 8') du côté du véhicule automobile avec une intensité de signal de transmission prédéterminée S_KFZ depuis la station d'émission et de réception RF (3, 4), le signal RF étant reçu par l'émetteur d'identification (5),
b) Transmettre un signal RF (9, 9') du côté du transpondeur d'identification avec une intensité de signal de transmission prédéterminée S_ID à la station d'émission et de réception RF, le signal RF étant reçu par la station d'émission et de réception RF (3, 4),
c) Détecter une intensité de signal reçue E_KFZ des signaux RF (8, 8') du côté du véhicule automobile à l'emplacement du transpondeur (5) et transmission de l'intensité de signal reçue E_KFZ à l'unité de commande (2) du côté du véhicule automobile,
d) Détecter une intensité de signal reçue E_ID du signal RF côté du transpondeur d'identification (9, 9') au niveau de la station d'émission et de réception RF (3, 4) et transmission des intensités de signal reçues à l'unité de commande côté véhicule à moteur (2),
e) Comparer une atténuation de signal du signal RF côté véhicule automobile (8, 8') provenant des stations d'émission et de réception RF avec l'atténuation de signal du signal RF côté du transpondeur d'identification associé (9, 9') reçu à cet endroit.

2. Procédé selon la revendication 1, **caractérisé en ce que** le signal RF (8, 8') du côté du véhicule automobile et/ou le signal RF (9, 9') du côté du transpondeur d'identification sont transmis avec une spécification de puissance de transmission prédéterminée.

3. Procédé selon l'une quelconque des revendications précédentes, **caractérisé en ce que** le signal RF (9, 9') côté du transpondeur d'identification est transmis avec une spécification de puissance d'émission et cette spécification de puissance d'émission est transmise à l'unité de commande (2) côté véhicule automobile, de préférence avec le signal RF (9, 9') côté du transpondeur d'identification.

4. Procédé selon l'une quelconque des revendications précédentes, **caractérisé en ce que** les signaux RF (8, 8') du côté du véhicule automobile et les signaux RF (9, 9') du côté du transpondeur d'identification sont transmis avec le même réglage de puissance d'émission.

5. Procédé selon la revendication 4, **caractérisé en ce que** la différence entre l'intensité du signal reçu E_KFZ et l'intensité du signal reçu E_ID est calculée et le processus d'authentification n'identifie le transpondeur d'identification (5) comme un transpondeur d'identification autorisé (5) que si la valeur absolue de la différence est inférieure à une valeur seuil prédéterminée et/ou
un quotient est calculé à partir de l'intensité du signal reçu E_KFZ et de l'intensité du signal reçu E_ID, et **en ce que** le processus d'authentification n'identifie le transpondeur (5) comme un transpondeur autorisé (5) que si la valeur absolue du quotient s'écarte de la valeur 1 d'au plus une valeur de tolérance prédéterminée.

6. Procédé selon l'une quelconque des revendications précédentes, **caractérisé en ce que** l'intensité du signal reçu E_KFZ est transmise à l'unité de commande (2) côté véhicule automobile conjointement avec le signal RF (9, 9') côté du transpondeur d'identification.

7. Procédé selon l'une quelconque des revendications précédentes, **caractérisé**
**en ce que** le système d'accès passif a un nombre d'au moins trois stations d'émission et de réception RF (3, 4) côté véhicule automobile qui sont couplées à l'unité de commande (2) côté véhicule automobile, et
**en ce que** les étapes a) à d) sont chacune exécutées pour une pluralité de ou pour chacune desquelles stations d'émission et de réception RF (3, 4).

8. Procédé selon l'une quelconque des revendications précédentes, **caractérisé en ce que** la comparaison de l'atténuation du signal RF (8, 8') du côté du véhicule automobile avec l'atténuation du signal RF (9, 9') du côté du transpondeur d'identification est effectuée au moyen de l'unité de commande (2) du côté du véhicule automobile.

9. Procédé selon l'une quelconque des revendications précédentes, **caractérisé en ce que** le protocole Bluetooth est utilisé pour la communication RF bidirectionnelle entre l'unité de commande (2) du côté du véhicule automobile et le transmetteur d'identification (5).

10. Procédé selon l'une quelconque des revendications précédentes, **caractérisé en ce que** l'émetteur d'identification (5) est conçu comme un smartphone.
